# DEMANDE DE BREVET EUROPEEN

(11) **EP 4 841 969 A2**
(43) Date de publication de la demande: **18.11.2026**
(21) Numéro de dépôt: 26201129.9
(22) Date de dépôt: 11.06.2020
(51) Int. Cl.: H04N 13/268

(54) **PROCÉDÉ ET DISPOSITIF DE TRAITEMENT DE DONNÉES DE VIDEO MULTI-VUES**

(30) Priorité: 27.06.2019 FR 1907043
(62) Numéro(s) de document de la (des) demande(s) initiale(s) en application de l'article 76 CBE: 20730673.9 / 3 991 401
(71) Demandeur: Orange, 92326 Châtillon Cedex (FR)
(72) Inventeur: JUNG, Joel, 92326 CHATILLON CEDEX (FR); NIKITIN, Pavel, 92326 CHATILLON CEDEX (FR); GARUS, Patrick, 92326 CHATILLON CEDEX (FR)
(74) Mandataire: Vidon Brevets & Stratégie

(57) **Abrégé**

L'invention concerne un procédé et un dispositif de traitement de données de vidéo multi-vues. Les données de vidéo multi-vues comprennent au moins une partie d'une image décodée (20) d'au moins une vue de la vidéo multi-vues, à partir d'un flux (STR) de données codées représentatif de la vidéo multi-vues. Selon l'invention, au moins une donnée, dite donnée de synthèse, est obtenue (21) à partir d'au moins ladite une partie de l'image décodée et au moins une image d'une vue intermédiaire de la vidéo multi-vues non codée dans ledit flux de données codées est synthétisée (22) à partir d'au moins ladite une partie de l'image décodée et de ladite donnée de synthèse obtenue.

## Description

### 1. Domaine de l'invention

L'invention concerne les vidéos dites immersives, représentatives d'une scène capturée par une ou plusieurs caméras, incluant les vidéos pour la réalité virtuelle et la navigation libre. Plus particulièrement, l'invention concerne le traitement (codage, décodage, synthèse de vues intermédiaires) de données de telles vidéos.

### 2. Art Antérieur

Une vidéo immersive permet à un spectateur de regarder une scène de n'importe quel point de vue, même d'un point de vue qui n'a pas été capturé par une caméra. Un système d'acquisition typique est un ensemble de caméras, qui capture une scène avec plusieurs caméras situées en dehors de la scène ou avec des caméras divergentes construites sur une plate-forme sphérique, situées à l'intérieur de la scène. Les vidéos sont généralement affichées via des casques de réalité virtuelle (aussi connu sous le nom HMD pour Head Mounted Device en anglais), mais peuvent également être affichées sur des écrans 2D dotés d'un système supplémentaire pour interagir avec l'utilisateur.

La navigation libre dans une scène nécessite de gérer correctement chaque mouvement de l'utilisateur afin d'éviter le mal des transports. Le mouvement est généralement correctement capturé par le dispositif d'affichage (un HMD par exemple). Cependant, fournir les pixels corrects à l'affichage, quel que soit le mouvement de l'utilisateur (rotationnel ou en translation), est actuellement un problème. Cela nécessite plusieurs vues capturées et la possibilité de générer des vues virtuelles (synthétisées) supplémentaires, calculées à partir des vues capturées décodées et des cartes de profondeur associées. Le nombre de vues à transmettre varie selon les cas d'utilisation. Toutefois, le nombre de vues à transmettre est grand et la quantité de données associées est donc souvent volumineuse. Par conséquent, la transmission des vues est un aspect essentiel des applications de vidéos immersives. Il est donc nécessaire de réduire autant que possible le débit binaire des informations à transmettre sans compromettre la qualité de la synthèse des vues intermédiaires. En effet, la synthèse de vues intermédiaires est une étape cruciale des applications de vidéos immersives, et le débit de transmission global doit donc être réduit en facilitant simultanément la synthèse de vues.

Dans un schéma de traitement de vidéo immersive typique, les vues sont capturées physiquement ou générées par ordinateur. Dans certains cas, les profondeurs sont également capturées, avec des capteurs dédiés. Cependant, la qualité de ces informations de profondeurs est généralement mauvaise et empêche de synthétiser efficacement des points de vue intermédiaires.

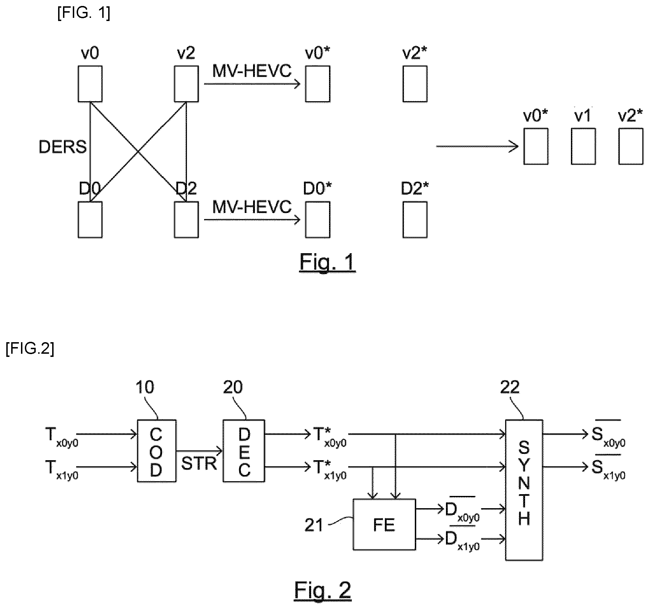

Des cartes de profondeur peuvent également être calculées à partir des images de texture des vidéos capturées. De nombreux algorithmes d'estimation de profondeurs existent et sont utilisés dans l'état de la technique. Les images de texture et les informations de profondeur estimées sont codées et envoyées à un dispositif d'affichage d'un utilisateur, comme illustré en figure 1. La figure 1 montre un schéma de traitement de vidéo immersive comprenant par exemple deux vues capturées V0 et V2, et des informations de profondeur D0 et D2 associées à chaque vue V0 et V2. Par exemple, les informations de profondeur D0 et D2 sont obtenues par un logiciel d'estimation de profondeur (par exemple DERS pour Depth Estimation Reference Software en anglais), les vues V0 et V2 et les informations de profondeur obtenues D0 et D2 sont ensuite codées, par exemple en utilisant un codeur MV-HEVC. Du côté du client, les vues (V0* et V2*) et les profondeurs de chaque vue (D0* et D2*) sont décodées et utilisées par un algorithme de synthèse pour calculer des vues intermédiaires, par exemple ici une vue intermédiaire V1. Par exemple, le logiciel VSRS (pour View Synthesis Reference Software en anglais) peut être utilisé comme algorithme de synthèse de vue.

Lorsque les cartes de profondeur sont calculées avant le codage et la transmission des données codées d'une vidéo immersive, différents problèmes sont rencontrés. Notamment, le débit associé à la transmission des différentes vues est important. En particulier, bien que les cartes de profondeur coûtent généralement moins que la texture, elles restent une proportion importante du train de bits (entre 15% et 30% du total).

De plus, des cartes de profondeurs complètes sont générées et envoyées, alors que côté client, toutes les parties de toutes les cartes de profondeurs ne sont pas forcément utiles. En effet, les vues peuvent avoir des informations redondantes, ce qui rend certaines parties de cartes de profondeurs inutiles. De plus, dans certains cas, les spectateurs peuvent demander uniquement des points de vue spécifiques. Sans canal de retour entre le client et le serveur fournissant la vidéo immersive codée, l'estimateur de profondeur situé côté serveur ignore la connaissance de ces points de vue spécifiques.

Le calcul des informations de profondeur côté serveur évite toute interaction entre l'estimateur de profondeur et l'algorithme de synthèse. Par exemple, si un estimateur de profondeur souhaite informer l'algorithme de synthèse du fait qu'il ne peut pas trouver correctement la profondeur d'une zone spécifique, il doit transmettre cette information dans le flux binaire, très probablement sous la forme d'une carte binaire.

De plus, la configuration du codeur pour coder les cartes de profondeur afin d'obtenir le meilleur compromis entre la qualité de la synthèse et le coût de codage pour la transmission des cartes de profondeur n'est pas évidente.

Enfin, le nombre de pixels à traiter par un décodeur est élevé lorsque les textures et les cartes de profondeur sont codées, transmises et décodées. Cela peut par exemple ralentir le déploiement des schémas de traitement de vidéos immersives sur des terminaux de type smartphone (pour téléphone intelligent en français).

Il existe donc un besoin d'améliorer l'état de la technique.

### 3. Exposé de l'invention

L'invention vient améliorer l'état de la technique. Elle concerne à cet effet un procédé de traitement de données de vidéo multi-vues, lesdites données de vidéo multi-vues comprenant au moins une partie d'une image reconstruite d'au moins une vue de la vidéo multi-vues, à partir d'un flux de données codées représentatif de la vidéo multi-vues, le procédé de traitement comprend:
- l'obtention d'au moins une donnée, à partir d'au moins ladite une partie de l'image reconstruite, dite donnée de synthèse,
- la synthèse d'au moins une image d'une vue intermédiaire de la vidéo multi-vues non codée dans ledit flux de données codées, à partir d'au moins ladite une partie de l'image reconstruite et de ladite donnée de synthèse obtenue.

Selon l'invention, des vues intermédiaires d'une vidéo multi-vues peuvent être synthétisées au niveau du décodeur ou du dispositif d'affichage sans nécessiter la transmission des données nécessaires à la synthèse de telles vues. Par exemple les vues intermédiaires peuvent être synthétisées par un dispositif situé après le décodeur dans la chaîne de restitution d'une vidéo multi-vues, ou dans un module compris dans le décodeur lui-même, après le processus de décodage du flux de données.

Avantageusement, les données nécessaires à la synthèse de vues intermédiaires sont obtenues côté décodeur, à partir d'au moins une partie de vues décodées et reconstruites qui ont été transmises au décodeur. De telles vues peuvent être des vues de la scène capturées ou non capturées par les caméras.

L'obtention de telles données peut être réalisée au niveau du décodeur, ou bien par un module indépendant du décodeur prenant en entrée les vues décodées et reconstruites par le décodeur. L'invention permet ainsi de réduire le débit de codage d'une vidéo multi-vues.

De plus, les données utilisées à la synthèse n'étant plus codées au contraire de l'art antérieur, il n'est plus nécessaire de trouver un codage optimal de ces données. Par exemple, dans le cas où les données utilisées pour la synthèse correspondent à des cartes de profondeur, il n'est plus nécessaire de trouver un compromis entre le coût de codage des textures de la vidéo multi-vues et le coût de codage des cartes de profondeurs associées.

Le décodage de la vidéo multi-vues est également simplifié, puisque le décodeur n'a plus à décoder les données utilisées pour la synthèse de vues intermédiaires qui étaient selon l'art antérieur codées dans un flux de données. De plus, le taux de pixels à traiter par le décodeur est ainsi réduit.

Selon un mode particulier de réalisation de l'invention, ladite donnée de synthèse correspond à au moins une partie d'une carte de profondeur.

Selon un mode particulier de réalisation de l'invention, le procédé de traitement de données comprend en outre le décodage à partir du flux de données codées d'au moins une donnée, dite donnée décodée, permettant de modifier la donnée de synthèse obtenue ou de contrôler l'obtention de la donnée de synthèse.

Selon un autre mode particulier de réalisation de l'invention, la donnée de synthèse est obtenue à l'aide d'un réseau de neurones.

Selon un autre mode particulier de réalisation de l'invention, la donnée décodée du flux de données codées correspond à une donnée de raffinement de la donnée de synthèse et le procédé de traitement de données de vidéo multi-vues comprend en outre la modification de ladite donnée de synthèse à partir de la donnée de raffinement décodée.

Ce mode particulier de réalisation de l'invention permet d'améliorer les données de synthèse obtenues côté décodeur, et donc la qualité de la synthèse de vues intermédiaires, en modifiant les données de synthèse grâce à des données de raffinement codées dans un flux de données transmis au dispositif mettant en œuvre le procédé de traitement de données par le décodeur ou le codeur. Les données de raffinement peuvent être codées dans le flux de données codées de la vidéo multi-vues, ou bien dans un autre flux de données codées.

Ici, le décodage de la donnée de raffinement peut correspondre seulement à la lecture de données codées dans le flux correspondant à la donnée de raffinement. En variante, le décodage de la donnée de raffinement peut aussi comprendre le décodage entropique des données codées pour obtenir la donnée de raffinement.

Selon encore une autre variante, le décodage de la donnée de raffinement peut également comprendre d'autres étapes de décodage pour reconstruire la donnée de raffinement, par exemple prédiction de la donnée de raffinement, transformée inverse, etc...

Selon un autre mode particulier de réalisation de l'invention, la donnée de synthèse est modifiée en ajoutant la donnée de raffinement à la donnée de synthèse.

Par exemple, côté codeur, une donnée de synthèse optimale correspondant à une donnée de synthèse obtenue à partir d'images originales (non codées) de la vidéo multi-vues peut être utilisée pour calculer une différence entre cette donnée de synthèse optimale et la donnée de synthèse obtenue à partir d'une partie de l'image reconstruite au décodeur. La donnée de raffinement correspond alors à une telle différence. Côté client, la donnée de synthèse est raffinée par ajout de la différence.

Ce mode particulier de réalisation de l'invention permet d'améliorer la qualité des images de vues intermédiaires synthétisées. En effet, les données de synthèse raffinées sont alors plus proches des données de synthèse qui seraient obtenues à partir d'images source de vues de la vidéo multi-vues.

Selon un autre mode particulier de réalisation de l'invention, la donnée décodée à partir du flux de données correspond à un paramètre de contrôle et le procédé de traitement de données de vidéo multi-vues comprend en outre l'application dudit paramètre de contrôle lors de l'obtention de ladite donnée de synthèse.

Ce mode particulier de réalisation de l'invention permet de contrôler le procédé d'obtention de la donnée de synthèse, par exemple par l'application d'un filtre pour dé-bruiter les données de synthèse obtenues ou aiguiser des bords d'objets dans les images. Un tel paramètre de contrôle peut avoir été déterminé au niveau du codeur via un processus d'optimisation débit/distorsion visant à optimiser la qualité des images synthétisées.

Selon un autre mode particulier de réalisation de l'invention, l'obtention de la donnée de synthèse comprend:
- l'extraction de ladite donnée de synthèse à partir d'au moins ladite une partie de l'image reconstruite,
- la modification de ladite donnée de synthèse obtenue à l'aide d'un réseau de neurones.

Ce mode particulier de réalisation de l'invention permet d'améliorer la qualité de la synthèse en raffinant les données de synthèse obtenues côté décodeur à partir des textures reconstruites de la vidéo multi-vues. Selon ce mode particulier de réalisation de l'invention, les données de synthèse obtenues sont modifiées à l'aide d'un réseau de neurones qui a été préalablement entraîné sur un ensemble de vidéos d'apprentissage.

Selon un autre mode particulier de réalisation de l'invention, le paramètre de contrôle correspond à un paramètre de mise à jour dudit réseau de neurones utilisé pour modifier ladite donnée de synthèse.

Ce mode particulier de réalisation de l'invention permet d'améliorer la qualité de la synthèse en raffinant les données de synthèse obtenues côté décodeur à l'aide d'une mise à jour du réseau de neurones.

L'invention concerne également un dispositif de traitement de données de vidéo multi-vues, lesdites données de vidéo multi-vues comprenant au moins une partie d'une image reconstruite d'au moins une vue de la vidéo multi-vues, à partir d'un flux de données codées représentatif de la vidéo multi-vues, le dispositif de traitement comprend un processeur et une mémoire configurés pour:
- obtenir au moins une donnée à partir d'au moins ladite une partie de l'image reconstruite, dite donnée de synthèse, utilisée pour synthétiser au moins une vue intermédiaire de la vidéo multi-vues,
- synthétiser au moins une image d'une vue intermédiaire de la vidéo multi-vues non codée dans ledit flux de données codées, à partir d'au moins ladite une partie de l'image reconstruite et de ladite donnée de synthèse obtenue.

Selon un mode particulier de réalisation de l'invention, un tel dispositif est compris dans un terminal.

Le procédé de traitement de données vidéo multi-vues selon l'invention peut être mis en œuvre de diverses manières, notamment sous forme câblée ou sous forme logicielle. Selon un mode particulier de réalisation de l'invention, le procédé de traitement de données vidéo multi-vues est mis en œuvre par un programme d'ordinateur. L'invention concerne également un programme d'ordinateur comportant des instructions pour la mise en œuvre du procédé de traitement de données vidéo multi-vues selon l'un quelconque des modes particuliers de réalisation décrits précédemment, lorsque ledit programme est exécuté par un processeur. Un tel programme peut utiliser n'importe quel langage de programmation. Il peut être téléchargé depuis un réseau de communication et/ou enregistré sur un support lisible par ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, une clé USB, ou encore un moyen d'enregistrement magnétique, par exemple un disque dur. D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, les supports d'enregistrement peuvent correspondre à un circuit intégré dans lequel le programme est incorporé, le circuit étant adapté pour exécuter ou pour être utilisé dans l'exécution du procédé en question.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
[FIG. 1] La figure 1 illustre un schéma de traitement de données de vidéo multi-vues selon l'art antérieur.
[FIG. 2] La figure 2 illustre des étapes d'un procédé de traitement de données de vidéo multi-vues selon un mode particulier de réalisation de l'invention.
[FIG. 3A] La figure 3A illustre des étapes d'un procédé de traitement de données de vidéo multi-vues selon un autre mode particulier de réalisation de l'invention.
[FIG. 3B] La figure 3B illustre des sous-étapes d'une étape d'obtention des cartes de profondeur selon un mode particulier de réalisation de l'invention.
[FIG. 4A] La figure 4A illustre des étapes d'un procédé de codage de vidéo multi-vues selon un mode particulier de réalisation de l'invention.
[FIG. 4B] La figure 4B illustre des étapes d'un procédé de traitement de données de vidéo multi-vues selon un autre mode particulier de réalisation de l'invention.
[FIG. 4C] La figure 4C illustre des sous-étapes d'une étape d'obtention des cartes de profondeur selon un autre mode particulier de réalisation de l'invention.
[FIG. 5] La figure 5 illustre un exemple d'un réseau de neurones utilisé pour l'extraction d'une donnée de synthèse dans le procédé de traitement de données de vidéo multi-vues selon un mode particulier de réalisation de l'invention.
[FIG. 6] La figure 6 illustre des étapes d'un procédé de traitement de données de vidéo multi-vues selon un autre mode particulier de réalisation de l'invention.
[FIG. 7] La figure 7 illustre un exemple d'un réseau de neurones utilisés pour le raffinement d'une donnée de synthèse dans le procédé de traitement de données de vidéo multi-vues selon un mode particulier de réalisation de l'invention.
[FIG. 8] La figure 8 illustre des étapes d'un procédé de codage de vidéo multi-vues selon un autre mode particulier de réalisation de l'invention.
[FIG. 9] La figure 9 illustre des étapes d'un procédé de traitement de données de vidéo multi-vues selon un autre mode particulier de réalisation de l'invention de l'invention.
[FIG. 10] La figure 10 illustre des étapes d'un procédé de codage de vidéo multi-vues selon un autre mode particulier de réalisation de l'invention.
[FIG. 11] La figure 11 illustre un dispositif de codage de vidéo multi-vues selon un mode particulier de réalisation de l'invention.
[FIG. 12] La figure 12 illustre un dispositif de traitement de données de vidéo multi-vues selon un mode particulier de réalisation de l'invention.

### 5. Description d'un mode de réalisation de l'invention

### 5.1 Principe général de l'invention

Le principe général de l'invention est de permettre de réaliser des synthèses de vues intermédiaires côté client à partir d'au moins une partie d'une vue reconstruite sans nécessiter le codage et la transmission de cartes de profondeur au décodeur.

Au lieu de transmettre de manière explicite les cartes de profondeur, i.e. de les coder dans le flux de données représentant la vidéo multi-vues, les cartes de profondeur sont estimées côté décodeur à partir des textures décodées de la vidéo multi-vues.

Ce principe général s'applique de manière préférentielle aux cartes de profondeur, mais il peut être étendu à tous types de données susceptibles d'être utilisées lors de la synthèse de vues intermédiaires. Ces données peuvent être utilisées en plus ou en remplacement des cartes de profondeur.

Des exemples de données susceptibles d'être utilisées lors de la synthèse de vues intermédiaires peuvent être, de manière non exhaustive:
- des cartes de profondeur partielles, i.e. des images pour lesquelles certains pixels correspondent à des cartes de profondeur et d'autres à une valeur réservée indiquant qu'aucune carte de profondeur n'est disponible,
- des cartes de contour ou des angles présents dans une image: les informations structurelles contenues dans les cartes de contour, les angles et les contours actifs peuvent être utilisés par l'algorithme de synthèse de vues, par exemple pour éviter les artefacts de rémanence (ghosting artifacts en anglais). Ceci peut être réalisé en améliorant l'algorithme de synthèse ou en améliorant les cartes de profondeur. Les approches de détection de contour peuvent comprendre l'utilisation d'opérateurs de type Sobel, Canny, Prewitt ou Roberts. Les angles peuvent être estimés à l'aide d'un opérateur de détection d'angle de type Harris,
- des caractéristiques extraites par des algorithmes de type SIFT pour "Scale-Invariant Feature Transform" en anglais, ou SURF pour "Speeded-Up Robust Features" en anglais. De tels algorithmes sont utilisés pour l'estimation d'homographies, de matrices fondamentales et d'appariement d'images. Les caractéristiques extraites par ces méthodes partagent donc des caractéristiques similaires à celles des cartes de profondeur, ce qui implique une relation entre les images. L'algorithme SURF est une extension de l'algorithme SIFT, remplaçant le filtre gaussien dans SIFT par un filtre moyen,
- des caractéristiques statistiques calculées sur une ou plusieurs textures (locales ou sur l'image complète), histogrammes, etc.

Des méthodes d'apprentissage machine (machine learning en anglais), tel que des réseaux de neurones en convolution (CNN pour Convolutional Neural Networks en anglais), peuvent également être utilisées pour extraire à partir des textures reconstruites des caractéristiques utiles à la synthèse de vues.

On appellera par la suite les données susceptibles d'être utilisées lors de la synthèse de vues intermédiaires: données de synthèse. Une telle expression couvre non seulement des cartes de profondeur, mais aussi les données précitées. D'autres types de données non citées ici sont aussi possibles.

### 5.2 Modes particuliers de réalisation de l'invention

La figure 2 illustre des étapes d'un procédé de traitement de données de vidéo multi-vues selon un mode particulier de réalisation de l'invention.

Par exemple, une scène est capturée par deux caméras convergentes situées hors de la scène et regardant la scène depuis deux emplacements différents, avec une distance différente de la scène et des orientations ou angles différents.

Chaque caméra fournit une séquence d'images 2D non compressée. Chaque séquence d'images 2D comprend respectivement une succession d'images de textures T_{x0y0} et T_{x1y0}. Lors d'une étape 10, ces séquences d'images sont codées à l'aide d'un codeur vidéo COD, par exemple un codeur vidéo multi-vues MV-HEVC, qui produit un flux de données binaires STR envoyé sur le réseau.

Côté client, un téléspectateur possède un smartphone équipé de fonctions de décodage de navigation libre. Le spectateur regarde la scène du point de vue fourni par la première caméra. Puis, par exemple, il glisse lentement à gauche vers l'autre caméra. Pendant ce processus, le smartphone affiche des vues intermédiaires de la scène qui n'ont pas été capturées par les caméras. Ces vues intermédiaires sont synthétisées par un module de synthèse SYNTH à partir des données de texture qui ont été reconstruites à partir du flux de données reçues.

Le mode particulier de réalisation décrit en relation avec la figure 2 est expliqué en relation avec le cas d'usage ci-dessus. La mise en œuvre du mode particulier de réalisation décrit en relation avec la figure 2 n'est toutefois pas limitée à ce seul cas d'usage.

Lors d'une étape 20, le flux binaire STR est décodé par un décodeur DEC, par exemple ici un décodeur MV-HEVC. A l'issue du décodage du flux binaire STR, le smartphone obtient les textures décodées T*_{x0y0} et T*_{x1y0}.

Selon l'invention, lors d'une étape 21, les cartes de profondeur *̅D̅*̅_̅{̅*̅x̅*̅0̅*̅y̅*̅0̅}̅ et *̅D̅*̅_̅{̅*̅x̅*̅1̅*̅y̅*̅0̅}̅ sont extraites à l'aide des textures décodées T*_{x0y0} et T*_{x1y0} par un estimateur de profondeur FE. Par exemple, ici le logiciel DERS (logiciel d'évaluation de la profondeur).

Lors d'une étape 22, les cartes de profondeur extraites *̅D̅*̅_̅{̅*̅x̅*̅0̅*̅y̅*̅0̅}̅ et *̅D̅*̅_̅{̅*̅x̅*̅1̅*̅y̅*̅0̅}̅ et les textures décodées T*_{x0y0} et T*_{x1y0} sont transmises en entrée du module de synthèse SYNTH pour effectuer la synthèse de vue du point de vue intermédiaire demandé par l'utilisateur à un instant donné. Par exemple, le module de synthèse SYNTH peut être un module de synthèse VSRS (View Synthesis Reference Software en anglais).

A l'issue de l'étape 22, le module de synthèse fournit les images de vues synthétisées *S*_{*x*0*y*0} et *S*_{*x*1*y*0} correspondant au point de vue demandé.

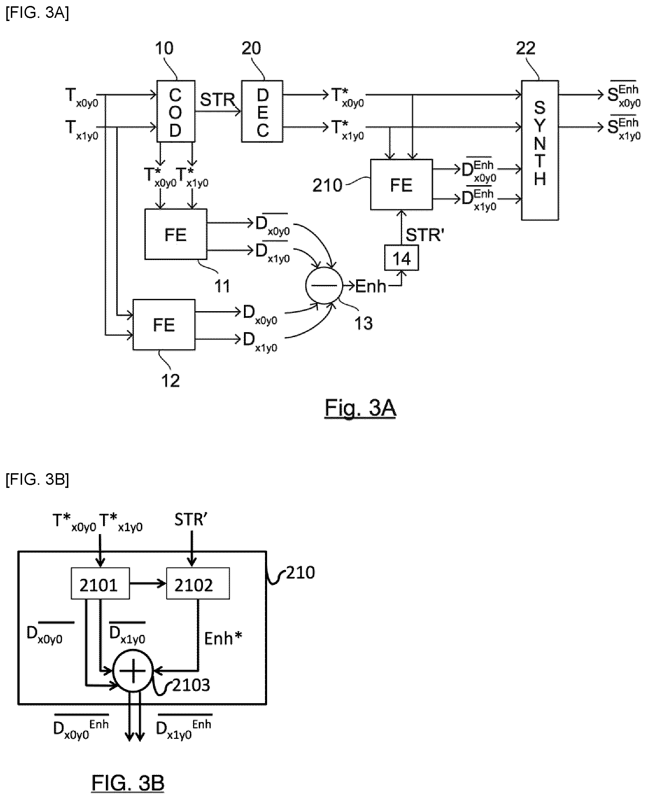

La figure 3A illustre des étapes d'un procédé de traitement de données de vidéo multi-vues selon un autre mode particulier de réalisation de l'invention. Selon cet autre mode particulier de réalisation de l'invention, les cartes de profondeur extraites côté client sont raffinées à l'aide de données de raffinement transmises par le codeur.

Par exemple, une scène est capturée par deux caméras divergentes, situées au centre de la scène et regardant vers l'extérieur, dans des directions différentes, mais avec quelques chevauchements.

Chaque caméra fournit une séquence d'images 2D non compressée. Chaque séquence d'images 2D comprend respectivement une succession d'images de textures T_{x0y0} et T_{x1y0}. Lors d'une étape 10, ces séquences d'images sont codées à l'aide d'un codeur vidéo COD, par exemple un codeur vidéo multi-vues MV-HEVC, qui produit un flux de données binaires STR envoyé sur le réseau.

Afin de raffiner les données de synthèse, ici des cartes de profondeur, extraites côté client, le codeur calcule des informations de raffinement à partir des cartes de profondeur estimées à partir de textures décodées et des cartes de profondeur estimées à partir de textures sources. Pour cela, lors d'une étape 11, les cartes de profondeur *̅D̅*̅_̅{̅*̅x̅*̅0̅*̅y̅*̅0̅}̅ et *̅D̅*̅_̅{̅*̅x̅*̅1̅*̅y̅*̅0̅}̅ sont extraites par l'estimateur de profondeur FE à l'aide des textures décodées T*_{x0y0} et T*_{x1y0} fournies par le codeur COD.

Lors d'une étape 12, les cartes de profondeur *D*_{*x*0*y*0} et *D*_{*x*1*y*0} sont extraites par l'estimateur de profondeur FE à l'aide des textures sources T_{x0y0} et T_{x1y0}.

Lors d'une étape 13, les données de raffinement *Enh* sont obtenues comme suit, en calculant la différence entre les cartes de profondeur *̅D̅*̅_̅{̅*̅x̅*̅0̅*̅y̅*̅0̅}̅ et *̅D̅*̅_̅{̅*̅x̅*̅1̅*̅y̅*̅0̅}̅ estimées à partir des textures décodées en 20 et les cartes de profondeur *D*_{*x*0*y*0} et *D*_{*x*1*y*0} estimées en 12, à partir des textures sources: $Enh = \left(\begin{matrix}Enh 0 \\ Enh 1\end{matrix}\right) = \left(\begin{matrix}\overline{{D}_{x 0 y 0}} - {D}_{x 0 y 0} \\ \overline{{D}_{x 1 y 0}} - {D}_{x 1 y 0}\end{matrix}\right) .$

Dans le cas de cartes de profondeur, pour chaque vue considérée, ici x0y0 et x1y0, une telle différence *Enh*0 et *Enh*1 est calculée pixel par pixel et représentée sous la forme d'une image (carte de profondeur).

Lors d'une étape 14, les données de raffinement obtenues *Enh* sont codées et transmises dans un flux binaire STR'. Ce flux binaire STR' peut être inséré dans le flux binaire STR issu du codage des textures ou bien être transmis indépendamment.

Côté client, par exemple un spectateur porte un casque HMD, équipé de fonctions de décodage de navigation libre. Le spectateur regarde la scène du point de vue fourni par la première caméra, avec un certain angle. Puis il avance lentement et tourne la tête. Pendant ce processus, le casque HMD affiche des vues intermédiaires de la scène qui n'ont pas été capturées par les caméras.

Le mode particulier de réalisation décrit en relation avec les figures 3A et 3B est expliqué en relation avec le cas d'usage ci-dessus. La mise en œuvre de ce mode particulier de réalisation n'est toutefois pas limitée à ce seul cas d'usage.

Lors de l'étape 20, le flux binaire STR est décodé par un décodeur DEC, par exemple ici un décodeur MV-HEVC. A l'issue du décodage du flux binaire STR, le casque HMD obtient les textures décodées T*_{x0y0} et T*_{x1y0}.

Selon l'invention, lors d'une étape 210, le casque HMD obtient les cartes de profondeur raffinées à partir des textures décodées T*_{x0y0} et T*_{x1y0} et des données de raffinement *Enh.*

La figure 3B illustre des sous-étapes de l'étape 210 d'obtention des cartes de profondeur selon ce mode particulier de réalisation de l'invention.

Lors d'une étape 2101, les cartes de profondeur *̅D̅*̅_̅{̅*̅x̅*̅0̅*̅y̅*̅0̅}̅ et *̅D̅*̅_̅{̅*̅x̅*̅1̅*̅y̅*̅0̅}̅ sont extraites à l'aide des textures décodées T*_{x0y0} et T*_{x1y0} par l'estimateur de profondeur FE. Par exemple, ici le logiciel DERS (logiciel d'évaluation de la profondeur).

Lors d'une étape 2102, le casque HMD reçoit et décode les données de raffinement *Enh* du flux de données STR' et obtient les données de raffinement décodées *Enh*.*

Lors d'une étape 2103, les données de raffinement décodées *Enh** sont ajoutées aux cartes de profondeur estimées *̅D̅*̅_̅{̅*̅x̅*̅0̅*̅y̅*̅0̅}̅ et *̅D̅*̅_̅{̅*̅x̅*̅1̅*̅y̅*̅0̅}̅, délivrant des cartes de profondeur améliorées *̅D̅*̅_̅{̅*̅x̅*̅0̅*̅y̅*̅0̅}̅*̅^̅{̅E̅n̅h̅}̅*̅ et *̅D̅*̅_̅{̅*̅x̅*̅1̅*̅y̅*̅0̅}̅*^̅{̅E̅n̅h̅}̅.*

Les cartes de profondeur améliorées sont par exemple calculées par: $\left(\begin{matrix}\overline{{{D}_{x 0 y 0}}^{Enh}} \\ \overline{{{D}_{x 1 y 0}}^{Enh}}\end{matrix}\right) = \left(\begin{matrix}\overline{{D}_{x 0 y 0}} + Enh 0 \\ \overline{{D}_{x 1 y 0}} + Enh 1\end{matrix}\right) .$

Puis, lors d'une étape 22 (fig.3A), les cartes de profondeur améliorées *̅D̅*̅_̅{̅*̅x̅*̅0̅*̅y̅*̅0̅}̅ *̅^̅{̅E̅n̅h̅}̅*̅ et *̅D̅*̅_̅{̅*̅x̅*̅1̅*̅y̅*̅0̅}̅ *̅^̅{̅E̅n̅h̅}̅*̅ et les textures décodées T*_{x0y0} et T*_{x1y0} sont transmises en entrée du module de synthèse SYNTH pour effectuer la synthèse de vue du point de vue intermédiaire demandé par l'utilisateur à un instant donné. Par exemple, le module de synthèse SYNTH peut être un module de synthèse VSRS (View Synthesis Reference Software).

A l'issue de l'étape 22, le module de synthèse fournit les images de vues synthétisées *̅S̅*̅_̅{̅*̅x̅*̅0̅*̅y̅*̅0̅}̅*̅^̅{̅E̅n̅h̅}̅*̅ et *̅S̅*̅_̅{̅*̅x̅*̅1̅*̅y̅*̅0̅}̅*̅^̅{̅E̅n̅h̅}̅*̅correspondant au point de vue demandé.

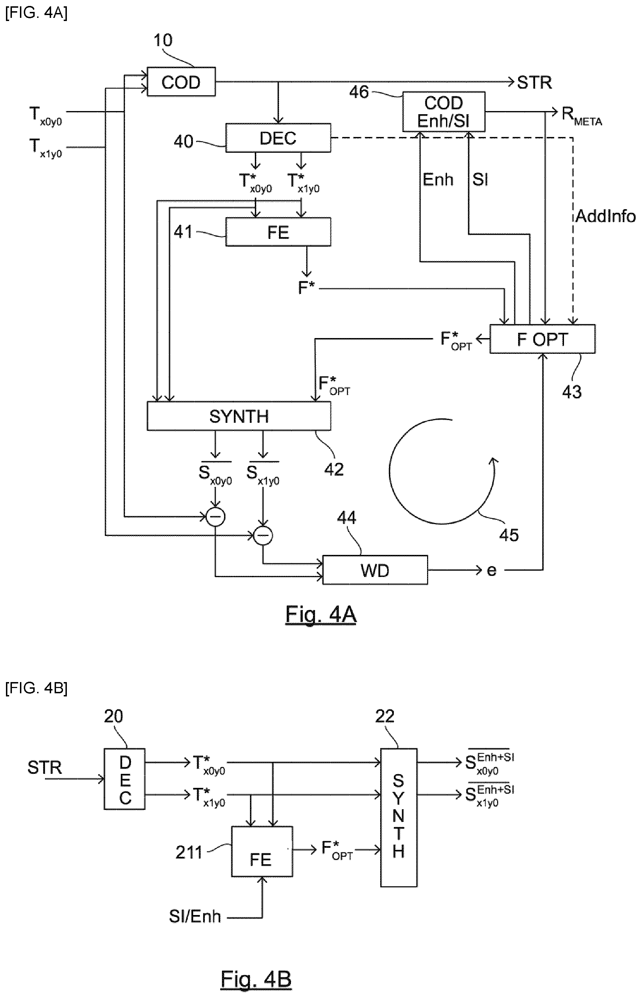

Les figures 4A et 4B illustrent respectivement des étapes d'un procédé de codage de vidéo multi-vues selon un mode particulier de réalisation de l'invention et des étapes d'un procédé de traitement de données de vidéo multi-vues correspondant.

Selon ce mode particulier de réalisation de l'invention, les cartes de profondeurs peuvent être raffinées par des données de raffinement ou l'obtention des cartes de profondeurs peut être optimisée à l'aide d'informations complémentaires transmises par le codeur.

Par exemple, une séquence vidéo virtuelle est créée à l'aide d'un modèle de rendu du logiciel Blender. Blender est un ensemble de logiciels d'infographie 3D, open source (source ouverte en anglais), pouvant être utilisés pour créer des films d'animation. Selon l'exemple décrit ici, deux caméras virtuelles convergentes sont placées dans le modèle de rendu à deux emplacements différents. Elles ont donc une distance à la scène virtuelle différente, et différentes orientations/angles par rapport à la scène.

Chaque caméra virtuelle fournit une séquence d'images 2D-CGI (pour Computer Generated Images en anglais) non compressée. Chaque séquence d'images 2D-CGI comprend respectivement une succession d'images de textures T_{x0y0} et T_{x1y0}.

Lors d'une étape 10, ces séquences d'images sont codées à l'aide d'un codeur vidéo COD, par exemple un codeur vidéo multi-vues MV-HEVC, qui produit un flux de données binaires STR envoyé sur le réseau.

Les informations complémentaires sont obtenues côté serveur, autrement dit au niveau de l'encodeur, à l'aide d'un processus d'optimisation. Un tel processus teste par exemple les trois outils d'amélioration des données de synthèse suivants:
- un filtre de lissage Gaussien, qui retire le bruit dans les cartes de profondeur. Le filtre peut être contrôlé par deux paramètres: une taille de noyau k et un écart-type *σ*. La taille du noyau k peut prendre les valeurs suivantes: 3, 5, 7, 9 et l'écart-type *σ* peut être 0.5, 1, 2, ou 4 ;
- un filtre bilatéral qui retire le bruit et accentue les bords. Ce filtre peut être contrôlé par trois paramètres: la taille d du voisinage de chaque pixel, l'écart-type dans l'espace couleur *σ_{color}* et l'écart-type dans l'espace des coordonnées *σ_{space}*. La taille d peut prendre les valeurs 3, 5, 7, 9, l'écart-type *σ_{color}* est dérivé de d par: *σ_{color}* = *d* × 2 et l'écart-type *σ_{space}* est dérivé de d par: *σ_{space}* = *d*/2;
- une opération morphologique telle que fermeture (une dilatation suivie d'une érosion), une ouverture (érosion suivie d'une dilatation). Ces opérations permettent de fermer les trous et de retirer de petits objets (*outliers* en anglais ou valeurs aberrantes en français) des cartes de profondeurs. Ces opérations sont contrôlées par une taille de noyau k' et un nombre N d'applications successives de l'opération morphologique. k' peut prendre les valeurs 3, 5, 7 ou 9 et N est un entier compris entre 1 et 4.

Outre les outils appliqués sur les cartes de profondeur citées ci-dessus, les informations complémentaires peuvent comprendre:
- des paramètres de contrôle nécessaires à l'extraction des cartes de contour, notamment un seuil inférieur et un seuil supérieur de détection de contours,
- des paramètres de contrôle de seuillage: si les arêtes détectées doivent être rejetées ou non. Les cartes de contour peuvent être utilisées dans le processus d'optimisation des caractéristiques afin d'empêcher le lissage des contours, qui doivent rester nets.

Classiquement, le codeur comprend un module de décodage DEC qui, lors d'une étape 40, décode et reconstruit les images de textures T*_{x0y0} et T*_{x1y0}.

Lors d'une étape 41, les données de synthèse F* sont extraites à partir des images de textures reconstruites T*_{x0y0} et T*_{x1y0}, par un module d'extraction FE de données de synthèse. Par exemple, les données de synthèse peuvent être des cartes de profondeur et le module d'extraction un estimateur de profondeur.

Lors d'une étape 43, chaque outil d'amélioration cité précédemment et chaque combinaison de paramètres possibles pour un outil est testé au codeur par exemple par une recherche exhaustive, à l'aide d'un module d'optimisation de données de synthèse FOPT.

Des informations additionnelles (*AddInfo*), telles que le partitionnement des blocs codés dans l'image, l'information de déplacement/mouvement des blocs, peuvent être transmises par le décodeur DEC au module d'optimisation FOPT pour aider lors de l'application d'un outil d'amélioration.

Le but du processus d'optimisation de données de synthèse est de minimiser la distorsion entre les textures synthétisées et les textures sources non compressées et de minimiser le débit requis pour transmettre les informations complémentaires*.*

Selon ce mode particulier de réalisation de l'invention, le module d'optimisation FOPT teste aussi le codage de données de raffinement *Enh* qui sont obtenues en calculant une différence entre les données de synthèse optimisées F*_{OPT} par un outil fourni par le module d'optimisation FOPT et les données de synthèse F* extraites à partir des images de textures reconstruites T*_{x0y0} et T*_{x1y0}.

Le module d'optimisation FOPT comprend donc un module de calcul des données de raffinement *Enh* (non représenté).

Le module d'optimisation FOPT teste chaque outil et chaque combinaison de paramètres de l'outil associée. Chaque outil testé produit une certaine distorsion *e* et un certain débit R_{META}, le débit R_{META} correspondant au débit requis pour transmettre les informations complémentaires SI, c'est à dire l'outil sélectionné et les paramètres correspondants de cet outil.

Lors de l'optimisation débit/distorsion, pour chaque outil testé et sa combinaison de paramètres, le module d'optimisation FOPT teste si un meilleur compromis débit/distorsion est obtenu en codant l'outil testé et sa combinaison de paramètres ou des données de raffinement *Enh* obtenues en calculant la différence entre les données de synthèse optimisées F*_{OPT} par l'outil testé et les données de synthèse F* extraites à partir des images de textures reconstruites T*_{x0y0} et T*_{x1y0}.

Lorsque le compromis débit/distorsion est meilleur pour le codage des données de raffinement *Enh,* le débit R_{META} correspond au débit nécessaire pour transmettre ces données de raffinement *Enh.*

Pour chaque outil et combinaison de paramètres associés à un outil, la qualité de la synthèse est vérifiée (étape 45) et un outil et ses paramètres associés sont sélectionnés au sens d'un critère débit/distorsion.

Pour cela, pour chaque outil et combinaison de paramètres associés à un outil, le module d'optimisation de données de synthèse FOPT délivre des données de synthèse Fₒₚₜ* optimisées. Ces données de synthèse Fₒₚₜ* optimisées sont obtenues par l'application aux données de synthèse extraites F* de l'outil et de la combinaison de paramètres testés. Il s'agit des données de synthèse F*_{OPT} qui seront obtenues côté client, soit à partir des informations complémentaires SI, soit à partir des données de raffinement *Enh.*

Lors d'une étape 42, un module de synthèse SYNTH réalise la synthèse de vues *̅S̅*̅_̅{̅*̅x̅*̅0̅*̅y̅*̅0̅}̅ et *̅S̅*̅_̅{̅*̅x̅*̅1̅*̅y̅*̅0̅}̅ à partir des textures reconstruites T*_{x0y0} et T*_{x1y0} et des données de synthèse optimisées Fₒₚₜ*. Lors d'une étape 44, la distorsion e entre les textures non compressées et les vues synthétisées *̅S̅*̅_̅{̅*̅x̅*̅0̅*̅y̅*̅0̅}̅ et *̅S̅*̅_̅{̅*̅x̅*̅1̅*̅y̅*̅0̅}̅ est calculée.

Lors d'une étape 46, l'outil testé par le module d'optimisation FOPT et ses paramètres sont codés comme informations complémentaires SI pour fournir le débit R_{META} associé.

La distorsion e et le débit R_{META} associés à l'outil testé sont fournis au module d'optimisation FOPT afin de réaliser l'optimisation débit/distorsion et sélectionner l'outil et ses paramètres qui fournissent Fₒₚₜ* tel que ${F}_{OPT}^{∗} = argmin \left({R}_{META}+λ\times e\right)$. où *λ* représente un paramètre lagrangien pour l'optimisation débit/distorsion.

Comme décrit plus haut, le module d'optimisation FOPT teste également si pour l'outil testé, la transmission de données de raffinement *Enh* est moins chère en termes de débit que le codage de l'outil testé et ses paramètres.

Dans le cas où le meilleur compromis débit/distorsion correspond à la transmission des données de raffinement *Enh*, aucune information complémentaire SI n'est transmise. Les données de raffinement *Enh* sont transmises dans le flux binaire STR ou un autre flux binaire. Sinon, si le meilleur compromis débit/distorsion correspond à la transmission de l'outil sélectionné et de ses paramètres, ces informations sont codées dans les informations complémentaires SI, et aucune donnée de raffinement *Enh* n'est transmise. Les informations complémentaires (SI) sont transmises dans le flux binaire STR ou un autre flux binaire. Les informations complémentaires (SI) sont considérées comme un paramètre de contrôle permettant de contrôler l'obtention des données de synthèse côté client au sens de l'invention.

Côté client, un spectateur est équipé d'une télévision connectée, aussi connue sous le nom de Smart-TV en anglais, équipée de fonctions de décodage de navigation libre. Le spectateur regarde la scène du point de vue fourni par la première caméra virtuelle. Puis il se dirige lentement vers l'autre caméra virtuelle. Pendant ce processus, la télévision connectée affiche des vues intermédiaires de la scène qui n'ont pas été capturées par les caméras.

La figure 4B illustre le procédé de décodage selon le mode particulier de réalisation décrit en relation avec la figure 4A. Selon cet exemple, les mêmes outils d'optimisation des données de synthèse sont disponibles côté client.

Lors de l'étape 20, le flux binaire STR est décodé par le décodeur DEC, par exemple ici un décodeur MV-HEVC. A l'issue du décodage du flux binaire STR, les textures décodées T*_{x0y0} et T*_{x1y0} sont obtenues.

Selon l'invention, lors d'une étape 211, les données de synthèse optimisées F*_{OPT} sont obtenues à partir des textures décodées T*_{x0y0} et T*_{x1y0} et sont raffinées par les données de raffinement *Enh* ou optimisées par les informations complémentaires SI en fonction de ce qui a été transmis au décodeur*.*

Pour cela, lors de l'étape E211, comme à l'encodeur, les données de synthèse F* sont extraites à partir des textures décodées T*_{x0y0} et T*_{x1y0}.

Si des informations complémentaires SI indiquant un outil à appliquer aux données de synthèse et les paramètres correspondant à cet outil ont été transmis, les données de synthèse F* sont optimisées par l'application de cet outil et de ses paramètres indiqués dans les informations complémentaires SI pour fournir les données de synthèse optimisées F*_{OPT}. Si des données de raffinement *Enh* sont transmises au décodeur, les données de synthèse F* sont raffinées en ajoutant les données de raffinement décodées *Enh* aux données de synthèse F* pour fournir les données de synthèse optimisées F*_{OPT}.

Puis, lors de l'étape 22, les données de synthèse optimisées F*_{OPT} et les textures décodées T*_{x0y0} et T*_{x1y0} sont transmises en entrée du module de synthèse SYNTH pour effectuer la synthèse de vue d'un point de vue intermédiaire demandé par l'utilisateur à un instant donné.

A l'issue de l'étape 22, le module de synthèse fournit les images de vues synthétisées *̅S̅*̅_̅{̅*̅x̅*̅0̅*̅y̅*̅0̅}̅^̅{̅*̅E̅n̅h̅*̅/̅*̅S̅I̅*̅}̅et *̅S̅*̅_̅{̅*̅x̅*̅1̅*̅y̅*̅0̅}̅^̅{̅*̅E̅n̅h̅*̅/̅*̅S̅I̅*̅}̅correspondant au point de vue demandé.

Le mode particulier de réalisation décrit en relation avec les figures 4A et 4B est expliqué en relation avec un cas d'usage particulier décrit ci-dessus. La mise en œuvre du mode particulier de réalisation décrit en relation avec les figures 4A et 4B n'est toutefois pas limitée à ce seul cas d'usage.

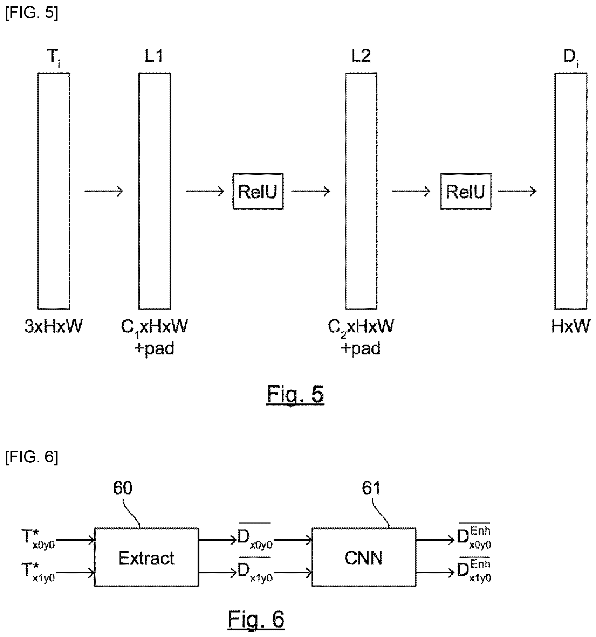

La figure 5 illustre un exemple d'un réseau de neurones utilisé pour l'extraction d'une donnée de synthèse dans le procédé de traitement de données de vidéo multi-vues selon un mode particulier de réalisation de l'invention.

Selon le mode particulier de réalisation de l'invention décrit ici, les données de synthèse Dᵢ sont extraites à partir des textures décodées Tᵢ par un réseau de neurones en convolution (CNN pour Convolutional Neural Network en anglais). Les données de synthèse à l'aide d'un tel réseau de neurones sont des données haut-niveau correspondant à la sortie du réseau de neurones. Le réseau de neurones peut être intégré dans le module FE d'extraction des données de synthèse de l'un quelconques des modes particuliers de réalisation de l'invention décrits précédemment.

La figure 5 illustre la structure d'un tel réseau de neurones. Le réseau de neurones prend en entrée une image de texture Tᵢ sur trois composantes couleur, par exemple RGB, chaque composante ayant une taille HxW, où H correspond au nombre de lignes de pixels de la composante et W correspond au nombre de colonnes de pixels de la composante. La sortie du réseau correspond aux données de synthèse Dᵢ, par exemple une carte de profondeur associée à l'image de texture fournie en entrée, la carte de profondeur ayant une taille HxW. La structure du réseau de neurones comprend deux couches de filtres L1 et L2 ainsi que des étapes de rectification linéaires (Rel U) après chaque couche de filtres L1, L2. Chaque couche de filtre L1 et L2 s'applique respectivement sur des données de taille C1xHxW et C2xHxW, où C1 et C2 correspondent respectivement au nombre de noyaux de convolution appliqués à chaque couche. De sorte à garder la même résolution, un padding (remplissage en français, nommé pad sur la figure 5) est appliqué avant chaque couche en convolution du réseau de neurones.

Afin de calculer une erreur pour la rétro-propagation, une vérité terrain de profondeur est utilisée. Pour cela, un apprentissage du réseau de neurones est réalisé à l'aide d'un ensemble de données Kitty (textures et profondeurs réelles) côté serveur. Le réseau de neurones final est ensuite déployé vers les terminaux clients qui seront en charge du décodage, par un smartphone du client.

Pour l'apprentissage, l'algorithme d'optimisation Adam (une extension de la descente de gradient stochastique) est utilisé avec des hyper-paramètres configurés de sorte que la vitesse d'apprentissage *α* est égale à 0,001 et les moments *β*₁ et *β*₂ sont: *β*₁ = 0,99 et *β*₂ = 0,99.

La figure 6 illustre des étapes d'un procédé de traitement de données de vidéo multi-vues selon un autre mode particulier de réalisation de l'invention.

Selon ce mode particulier de réalisation de l'invention, les données de synthèse extraites sont optimisées à l'aide d'un réseau de neurones. Ce mode particulier de réalisation de l'invention peut s'appliquer au module d'extraction FE des données de synthèse décrit précédemment selon l'un quelconque des modes particuliers de réalisation de l'invention.

Par exemple, selon un exemple de mise en œuvre, une scène est capturée par une caméra dite Lightfield (champ de lumière en français), située en dehors de la scène et regardant la scène. On considère ici que seulement deux vues, c'est à dire deux séquences 2D non compressées, sont conservées. Chaque séquence comprend une succession d'images de textures T_{x0y0} et T_{x1y0}.

Comme dans les modes de réalisation décrits précédemment, ces deux séquences sont codées, par exemple par un codec multi-vues, qui génère un flux de bits envoyé sur le réseau. Côté client, par exemple, un spectateur dispose d'un dispositif d'affichage Lightfield, équipé de fonctions de décodage de navigation libre. Le spectateur regarde la scène du point de vue représenté par l'image plénoptique droite. Ensuite, par exemple, il modifie lentement sa position de visualisation à gauche vers l'autre image plénoptique. Pendant ce processus, le dispositif d'affichage Ligthfield affiche des vues intermédiaires de la scène qui ont été ignorées côté serveur ou qui n'ont pas été capturées par la caméra Lightfield.

Le processus de codage, respectivement de décodage, est similaire à celui décrit en relation avec la figure 2, et seules les étapes d'extraction des données de synthèse sont modifiées.

Une fois que les données de synthèse optimisées sont obtenues, elles sont fournies en entrée du module de synthèse, par exemple ici un dispositif de rendu Lightfield, qui réalise la synthèse d'un point de vue demandé par l'utilisateur à un instant donné. La sortie d'un tel module de synthèse comprend par exemple les vues *̅S̅*̅_̅{̅*̅x̅*̅0̅*̅y̅*̅0̅}̅*,* *̅S̅*̅_̅{̅*̅x̅*̅1̅*̅y̅*̅0̅}̅ et *̅S̅*̅_̅{̅*̅x̅*̅0̅.̅5̅*̅y̅*̅0̅}̅. Comme l'utilisateur change sa position de visualisation un peu plus vers la gauche, des vues intermédiaires entre les points de vue x=0.5 et x=1 doivent être synthétisées. Les cartes de profondeur sont alors de nouveau estimées par le module d'extraction FE en utilisant cette fois la vue précédemment synthétisée *̅S̅*̅_̅{̅*̅x̅*̅0̅.̅5̅*̅y̅*̅0̅}̅ à la place de la texture décodée T_{x0y0}*. La carte de profondeur obtenue D_{x0.5y0} est ensuite utilisée pour synthétiser les points de vue intermédiaires demandés entre x=0.5 et x=1.

Selon le mode particulier de réalisation de l'invention décrit ici, comme dans l'exemple décrit en relation avec la figure 2, lors d'une étape 60, les cartes de profondeurs *̅D̅*̅_̅{̅*̅x̅*̅0̅*̅y̅*̅0̅}̅ et *̅D̅*̅_̅{̅*̅x̅*̅1̅*̅y̅*̅0̅}̅ sont extraites à partir des textures décodées T_{x0y0}* et T_{x1y0}* par un estimateur de profondeur (Extract).

Lors d'une étape 61, les cartes de profondeur *̅D̅*̅_̅{̅*̅x̅*̅0̅*̅y̅*̅0̅}̅ et *̅D̅*̅_̅{̅*̅x̅*̅1̅*̅y̅*̅0̅}̅ sont optimisées à l'aide d'un réseau de neurones (CNN) pour fournir des cartes de profondeurs améliorées $\overline{{D}_{x 0 y 0}^{Enh}}$ et $\overline{{D}_{x 1 y 0}^{Enh}}$. Le mode particulier de réalisation décrit en relation avec la figure 6 est expliqué en relation avec un cas d'usage particulier décrit ci-dessus. La mise en œuvre du mode particulier de réalisation décrit en relation avec la figure 6 n'est toutefois pas limitée à ce seul cas d'usage.

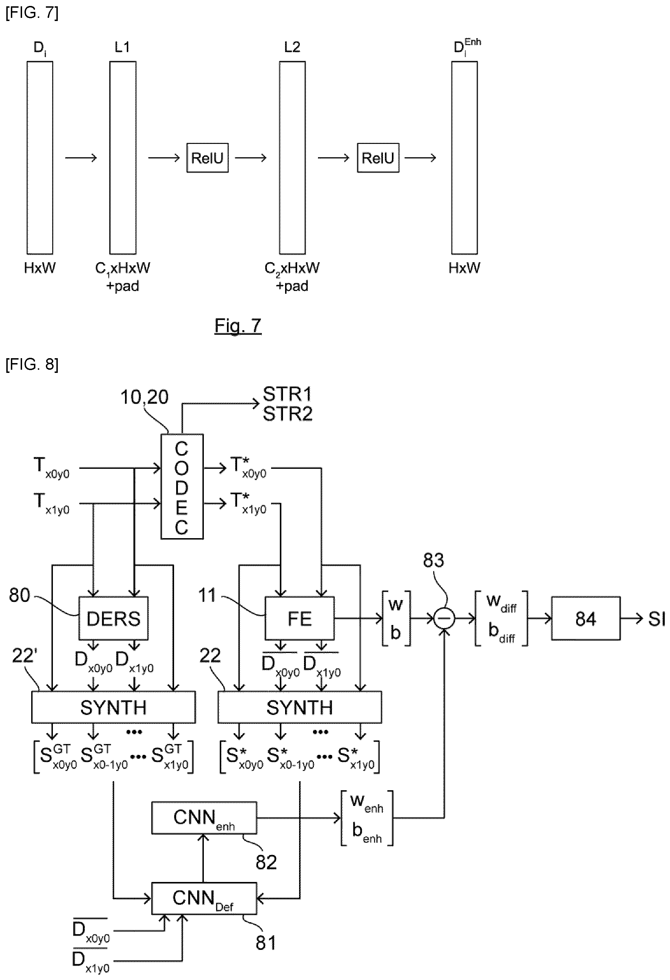

La figure 7 illustre la structure d'un tel réseau de neurones. Le réseau de neurones prend en entrée une carte de profondeur Dᵢ de taille HxW où H correspond au nombre de lignes de pixels et W correspond au nombre de colonnes de pixels de la carte de profondeur, et la sortie du réseau est une carte de profondeur améliorée Dᵢ^{Enh}, également de taille HxW. La structure du réseau de neurones comprend deux couches de filtres L1 et L2 ainsi que des étapes de rectification linéaire (Rel U) après chaque couche de filtres L1, L2. Chaque couche de filtre L1 et L2 s'applique respectivement sur des données de taille C1xHxW et C2xHxW, où C1 et C2 correspondent respectivement au nombre de noyaux de convolution appliqués à chaque couche. De sorte à garder la même résolution, un padding (remplissage en français, nommé pad sur la figure 7) est appliqué avant chaque couche en convolution du réseau de neurones. Afin de calculer une erreur pour la rétro-propagation, une vérité terrain de profondeur est utilisée. Pour cela, un apprentissage du réseau de neurones est réalisé à l'aide d'un ensemble de données Kitty (textures et profondeurs réelles) côté serveur. Pour l'apprentissage, l'algorithme d'optimisation Adam est utilisé avec les paramètres suivants: *α* = 0,001, *β*₁ = 0,99 et *β*₂ = 0,99.

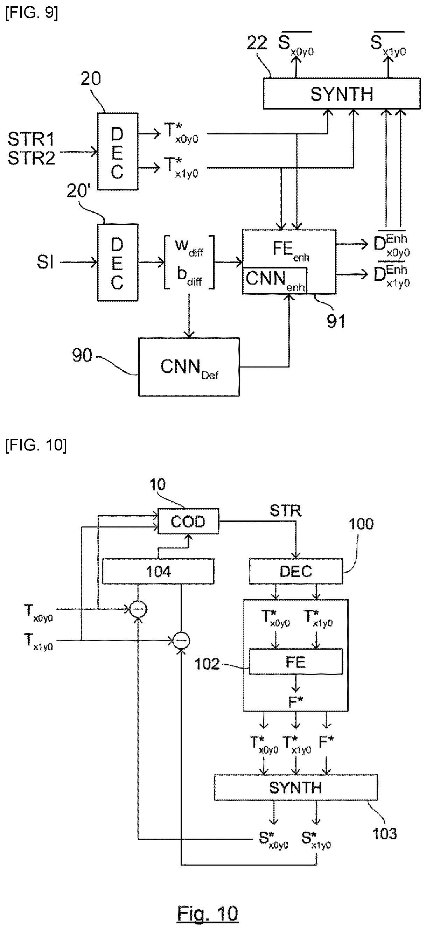

On présente ci-dessous en relation avec la figure 8 et la figure 9 un autre mode particulier de réalisation de l'invention. Selon ce mode particulier de réalisation de l'invention, les données de synthèse extraites à partir des textures reconstruites sont améliorées à l'aide d'informations complémentaires.

Un exemple de cas d'usage d'un tel mode particulier de réalisation de l'invention est décrit ci-dessous. La mise en œuvre décrite plus loin en relation avec les figures 8 et 9 n'est toutefois pas limitée à ce seul cas d'usage.

Une scène est capturée par deux caméras divergentes situées à l'intérieur de la scène et regardant la scène depuis deux emplacements différents, avec une distance différente de la scène et des orientations ou angles différents.

Chaque caméra fournit une séquence d'images 2D non compressée. Chaque séquence d'images 2D comprend respectivement une succession d'images de textures T_{x0y0} et T_{x1y0}. Ces séquences d'images T_{x0y0} et T_{x1y0} sont codées à l'aide d'un codeur vidéo, par exemple un codeur vidéo multi-vues MV-HEVC, qui produit un flux de données binaires STR envoyé sur le réseau.

Côté client, par exemple un spectateur porte un casque HMD connecté à un ordinateur, équipé de fonctions de décodage de navigation libre. Le spectateur peut regarder la scène du point de vue fourni par la première caméra. Puis il change lentement sa position de visualisation vers l'autre caméra. Pendant ce processus, l'ordinateur calcule des vues intermédiaires de la scène qui n'ont pas été capturées par les caméras et les affiche via le caque HMD.

La figure 8 illustre des étapes d'un procédé de codage de vidéo multi-vues selon le mode particulier de réalisation de l'invention décrit ici.

Classiquement, lors des étapes 10, 20, les séquences d'images T_{x0y0} et T_{x1y0} sont codées séparément et reconstruites à l'aide d'un codeur-décodeur vidéo CODEC, par exemple un codeur vidéo HEVC, qui produit deux flux de données binaires de données STR1, STR2 envoyés sur le réseau et fournissant en sortie les textures reconstruites T_{x0y0}* et T_{x1y0}*.

Afin de raffiner les données de synthèse, ici des cartes de profondeur, extraites côté client, le codeur calcule des informations complémentaires permettant d'améliorer les données de synthèse extraites au décodeur. Selon le mode particulier de réalisation décrit ici, les informations complémentaires sont obtenues par un apprentissage d'un réseau de neurones réalisé à partir de vues de la scène synthétisées.

Pour cela, lors d'une étape 11, les cartes de profondeur *̅D̅*̅_̅{̅*̅x̅*̅0̅*̅y̅*̅0̅}̅ et *̅D̅*̅_̅{̅*̅x̅*̅1̅*̅y̅*̅0̅}̅ sont extraites par l'estimateur de profondeur FE à l'aide des textures décodées T*_{x0y0} et T*_{x1y0} fournies par le codeur. Après leur extraction, ces cartes de profondeur sont améliorées en utilisant un réseau de neurones pré-entrainé CNN_{Def} intégré dans le module FE.

Le réseau de neurone CNN_{Def} a été au préalable entraîné sur un ensemble de séquences test. Un exemple de structure d'un tel réseau de neurones est par exemple décrit en relation avec la figure 7. Le réseau de neurones comprend deux couches de filtres et de mises à jour. Pour garder la même taille des données, un remplissage est utilisé. Le réseau de neurones prend en entrée une carte de profondeur et fournit en sortie une carte de profondeur améliorée. L'apprentissage initial du réseau de neurones est réalisé hors ligne en utilisant l'ensemble de séquences Kitty. Pour l'apprentissage, l'algorithme d'optimisation de descente de gradient est utilisé avec la vitesse d'apprentissage *α* égale à 0,0005. Le réseau de neurones pré-entrainé CNN_{Def} peut ensuite être déployé vers les terminaux clients qui seront en charge du décodage, par exemple un smartphone du client.

Afin d'améliorer la qualité de la synthèse côté client, lors d'une étape 81, le réseau de neurones CNN_{Def} est ré-entrainé en utilisant les textures sources de la scène T_{x0y0} et T_{x1y0}. Ces textures ne font pas partie de l'ensemble d'apprentissage initial Kitty utilisé pour former le réseau de neurones et permettent donc d'actualiser le réseau de neurones à l'aide des données de la séquence multi-vues à transmettre au client.

Pour cela, lors d'une étape 80, des cartes de profondeur *D*_{*x*0*y*0} et *D*_{*x*1*y*0} sont extraites par un estimateur de profondeur DERS à l'aide des textures sources T_{x0y0} et T_{x1y0}.

Lors de l'étape 22, les cartes de profondeur *̅D̅*̅_̅{̅*̅x̅*̅0̅*̅y̅*̅0̅}̅ et *̅D̅*̅_̅{̅*̅x̅*̅1̅*̅y̅*̅0̅}̅ extraites à partir des textures reconstruites et les textures décodées T*_{x0y0} et T*_{x1y0} sont transmises en entrée d'un module de synthèse SYNTH pour effectuer la synthèse de vues de la scène.

A l'issue de l'étape 22, le module de synthèse fournit un ensemble de vues synthétisées $\left[{S}_{x 0 y 0 ,}^{∗}{S}_{x 0.1 y 0 ,}^{∗},…,{S}_{x 1 y 0}^{∗}\right]$.

Lors de l'étape 22', les cartes de profondeur *D*_{*x*0*y*0} et *D*_{*x*1*y*0} extraites à partir des textures sources et les textures sources T_{x0y0} et T_{x1y0} sont transmises en entrée du module de synthèse SYNTH pour effectuer la synthèse de vues de la scène. A l'issue de l'étape 22', le module de synthèse SYNTH fournit un ensemble de vues synthétisées $\left[{S}_{x 0 y 0 ,}^{GT}{S}_{x 0.1 y 0 ,}^{GT},…,{S}_{x 1 y 0}^{GT}\right]$.

Pour calculer une erreur de rétro-propagation lors de l'apprentissage du réseau de neurones CNN_{Def}, l'erreur calculée est une distance L2 entre les vues synthétisées $\left[{S}_{x 0 y 0 ,}^{∗}{S}_{x 0.1 y 0 ,}^{∗},…,{S}_{x 1 y 0}^{∗}\right]$.obtenues à partir des cartes de profondeurs estimées *̅D̅*̅_̅{̅*̅x̅*̅0̅*̅y̅*̅0̅}̅ et *̅D̅*̅_̅{̅*̅x̅*̅1̅*̅y̅*̅0̅}̅ et les vues synthétisées dites réelles $\left[{S}_{x 0 y 0 ,}^{GT}{S}_{x 0.1 y 0 ,}^{GT},…,{S}_{x 1 y 0}^{GT}\right]$ obtenues à partir des cartes de profondeurs *D*_{*x*0*y*0} et *D*_{*x*1*y*0} extraites à partir des textures sources.

Lors de l'étape 81, les poids du réseau de neurones CNN_{Def} sont ajustés pour fournir un réseau de neurones amélioré CNN_{Enh}. Grâce à ce ré-apprentissage, les performances du réseau de neurones CNN_{Def} sont améliorées.

Lors d'une étape 82, les paramètres $\left[\begin{matrix}{w}_{enh} \\ {b}_{enh}\end{matrix}\right]$ de mise à jour du réseau de neurones amélioré CNN_{Enh} sont déterminés, où wₑₙₕ représente les poids du réseau de neurones et bₑₙₕ le biais. Lors d'une étape 83, l'information complémentaire est déterminée comme la différence $\left[\begin{matrix}{w}_{diff} \\ {b}_{diff}\end{matrix}\right]$ entre les paramètres $\left[\begin{matrix}{w}_{enh} \\ {b}_{enh}\end{matrix}\right]$ du réseau de neurones amélioré CNNₑₙₕ et les paramètres $\left[\begin{matrix}w \\ b\end{matrix}\right]$ du réseau de neurones initial CNN_{Def}, avec *w_{diff} = wₑₙₕ* - *w* et *b_{diff} = bₑₙₕ - b.*

Lors d'une étape 84, l'information complémentaire est codée dans le flux de données binaire STR ou un autre flux de données SI. Une telle information complémentaire correspond à un paramètre de contrôle à appliquer lors de l'obtention des données de synthèse au sens de l'invention.

La figure 9 illustre des étapes d'un procédé de traitement de données de vidéo multi-vues selon le mode particulier de réalisation de l'invention décrit en relation avec la figure 8.

Lors de l'étape 20, les flux binaires STR1 et STR2, correspondant respectivement aux deux vues codées par le procédé de codage décrit en relation avec la figure 8, sont décodés par un ou des décodeurs DEC, par exemple ici un décodeur HEVC. A l'issue du décodage des flux binaires STR1 et STR2, les textures décodées T*_{x0y0} et T*_{x1y0} sont obtenues.

Lors d'une étape 20', le flux binaire SI comprenant les informations complémentaires est décodé par exemple par le décodeur DEC, pour fournir les règles d'ajustement $\left[\begin{matrix}{w}_{diff} \\ {b}_{diff}\end{matrix}\right]$ du réseau de neurones pré-entrainé CNN_{Def}.

Lors d'une étape 90, le réseau de neurones pré-entrainé CNN_{Def} est mis à jour à l'aide des règles d'ajustement $\left[\begin{matrix}{w}_{diff} \\ {b}_{diff}\end{matrix}\right]$ pour fournir le réseau de neurones amélioré CNN_{Enh}.

Lors d'une étape 91, les cartes de profondeur *̅D̅*̅_̅{̅*̅x̅*̅0̅}̅*̅_̅{̅y̅0̅}̅^̅{̅E̅n̅h̅}̅*̅ et *̅D̅*̅_̅{̅*̅x̅*̅1̅}̅*̅_̅{̅y̅0̅}̅^̅{̅E̅n̅h̅}̅*̅ sont extraites par l'estimateur de profondeur FEₑₙₕ à l'aide des textures décodées T*_{x0y0} et T*_{x1y0}. Après leur extraction, ces cartes de profondeur sont améliorées en utilisant le réseau de neurones amélioré CNN_{Enh}.

Lors de l'étape 22, les cartes de profondeur *̅D̅*̅_̅{̅*̅x̅*̅0̅}̅*̅_̅{̅y̅0̅}̅^̅{̅E̅n̅h̅}̅*̅ et *̅D̅*̅_̅{̅*̅x̅*̅1̅}̅*̅_̅{̅y̅0̅}̅^̅{̅E̅n̅h̅}̅*̅ obtenues à l'étape 91 sont transmises en entrée d'un module de synthèse SYNTH avec les textures reconstruites T*_{x0y0} et T*_{x1y0} pour effectuer la synthèse de vues de la scène demandées par l'utilisateur.

A l'issue de l'étape 22, le module de synthèse fournit par exemple les vues synthétisées *S*_{*x*0*y*0} et *̅S̅*̅_̅{̅*̅x̅*̅1̅*̅y̅*̅0̅}̅*.*

La figure 10 illustre des étapes d'un procédé de codage de vidéo multi-vues selon un autre mode particulier de réalisation de l'invention. Selon ce mode particulier de réalisation de l'invention, le codeur multi-vues est amélioré en tenant compte de l'optimisation débit/distorsion réalisée par ce codeur de la qualité de la synthèse de vues obtenue à partir des données de synthèse extraites des textures décodées. Autrement dit, le codage des textures est optimisé pour optimiser la qualité des vues synthétisées côté client. Classiquement, les décisions distorsion/débit sont basées sur la distorsion de chaque composante d'une vue (texture/profondeur) par rapport à la version non compressée de cette composante. Dans le codeur 3D-HEVC, la compression des cartes de profondeur dépend de la qualité de la synthèse. Étant donné que la qualité de la texture est importante pour la qualité de la synthèse, selon le mode particulier de réalisation de l'invention décrit ici, une distorsion conjointe des vues synthétisées est calculée et utilisée pour l'optimisation débit/distorsion dans le processus de codage de la texture.

Pour cela, lors d'une étape 10, les séquences d'images T_{x0y0} et T_{x1y0} capturées par les caméras sont codées à l'aide d'un codeur vidéo COD, par exemple un codeur vidéo multi-vues MV-HEVC.

Lors d'une étape 100, un décodeur DEC compris dans le codeur COD, reconstruit les textures codées, fournissant des textures décodées T*_{x0y0} et T*_{x1y0}.

Lors d'une étape 102, des données de synthèse F* sont extraites à partir des textures reconstruites, par un estimateur de profondeur FE. Ces données de synthèse sont par exemple des cartes de profondeur.

Lors d'une étape 103, les données de synthèse F* et les textures décodées T*_{x0y0} et T*_{x1y0} sont transmises en entrée du module de synthèse SYNTH pour effectuer la synthèse de vues. A l'issue de l'étape 103, le module de synthèse fournit les images de vues synthétisées S*_{x0y0} et S*_{x1y0}.

Une différence est alors calculée respectivement entre les images d'une vue source et les images d'une vue synthétisée correspondant à un même point de vue. Dans l'exemple décrit ici, on considère seulement deux points de vue distincts x0y0 et x1y0, mais d'autres points de vue peuvent être également pris en compte.

La qualité de la synthèse est évaluée à partir de la MSE (Mean Square Error en anglais) calculée entre une vue synthétisée et une texture source correspondante.

Pour cela, lors d'une étape 104, la distorsion conjointe des vues synthétisées est calculée. Par distorsion conjointe, on entend ici une somme pondérée de distorsions comprenant la distorsion d'une vue décodée par rapport à sa vue source correspondante, et la distorsion des vues synthétisées par rapport à leurs vues source correspondantes, c'est à dire correspondant au même point de vue. Une même texture peut être utilisée pour synthétiser plusieurs vues. Par exemple, T*_{x0y0} peut être utilisée pour synthétiser respectivement une vue S_{x1y0} et une vue S_{x2y0} correspondant respectivement à un même point de vue que les textures sources T_{x1y0} et T_{x2y0}.

Dans ce cas, la distorsion conjointe prend en compte l'erreur calculée entre S_{x1y0} et sa texture source T_{x1y0} et l'erreur calculée entre S_{x2y0} et sa texture source T_{x2y0}.

Dans ce cas, le codeur COD prend une décision commune pour toutes les vues. Par exemple, si la compression est effectuée image par image, c'est à dire que la décision de codage est prise au niveau image au lieu d'un niveau bloc dans l'image, il y a N décisions de codage possibles, avec N = N₁xN₂x...xN_{K}, K étant le nombre de vues à coder, et Nᵢ étant le nombre de décisions de codage possibles pour la vue i (1≤i≤K).

Parmi toutes ces décisions de codage possibles, le codeur sélectionne le codage qui produit le meilleur compromis débit/distorsion.

A chaque tour de l'optimisation débit/distorsion, les textures sont codées et reconstruites et les données de synthèse sont extraites à partir des textures reconstruites.

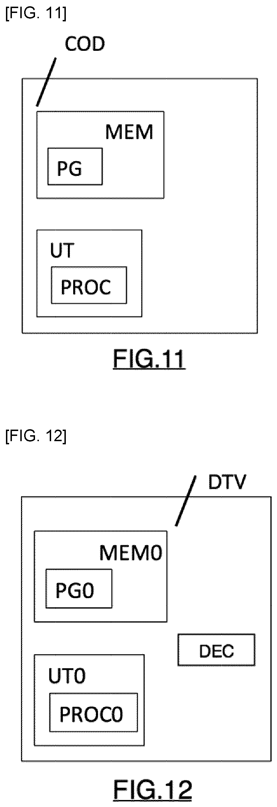

La figure 11 présente la structure simplifiée d'un dispositif de codage COD adapté pour mettre en œuvre le procédé de codage selon l'un quelconque des modes particuliers de réalisation de l'invention décrit précédemment.

Selon un mode particulier de réalisation de l'invention, les étapes du procédé de codage sont mises en œuvre par des instructions de programme d'ordinateur. Pour cela, le dispositif de codage COD a l'architecture classique d'un ordinateur et comprend notamment une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en œuvre les étapes du procédé de codage tel que décrit ci-dessus, lorsque le programme est exécuté par le processeur PROC.

A l'initialisation, les instructions de code du programme d'ordinateur PG sont par exemple chargées dans une mémoire RAM (non représentée) avant d'être exécutées par le processeur PROC. Le processeur PROC de l'unité de traitement UT met notamment en œuvre les étapes du procédé de codage décrit ci-dessus, selon les instructions du programme d'ordinateur PG.

La figure 12 présente la structure simplifiée d'un dispositif de traitement de données de vidéo multi-vues DTV adapté pour mettre en œuvre le procédé de traitement de données multi-vues selon l'un quelconque des modes particuliers de réalisation de l'invention décrit précédemment.

Selon un mode particulier de réalisation de l'invention, le dispositif de traitement de données de vidéo multi-vues DTV a l'architecture classique d'un ordinateur et comprend notamment une mémoire MEM0, une unité de traitement UT0, équipée par exemple d'un processeur PROC0, et pilotée par le programme d'ordinateur PG0 stocké en mémoire MEM0. Le programme d'ordinateur PG0 comprend des instructions pour mettre en œuvre les étapes du procédé de traitement de données de vidéo multi-vues tel que décrit ci-dessus, lorsque le programme est exécuté par le processeur PROC0.

A l'initialisation, les instructions de code du programme d'ordinateur PG0 sont par exemple chargées dans une mémoire RAM (non représentée) avant d'être exécutées par le processeur PROC0. Le processeur PROC0 de l'unité de traitement UT0 met notamment en œuvre les étapes du procédé de traitement de données de vidéo multi-vues décrit ci-dessus, selon les instructions du programme d'ordinateur PG0.

Selon un mode particulier de réalisation de l'invention, le dispositif de traitement de données de vidéo multi-vues DTV comprend un décodeur DEC adapté pour décoder un ou des flux de données codées représentatif d'une vidéo multi-vues.

Un mode de réalisation particulier concerne un procédé de traitement de données de vidéo multi-vues, lesdites données de vidéo multi-vues comprenant au moins une partie d'une image décodée (20) d'au moins une vue de la vidéo multi-vues, à partir d'un flux (STR) de données codées représentatif de la vidéo multi-vues, le procédé de traitement comprend:
- l'obtention (21) d'au moins une donnée, à partir d'au moins ladite une partie de l'image décodée, dite donnée de synthèse,
- la synthèse (22) d'au moins une image d'une vue intermédiaire de la vidéo multi-vues non codée dans ledit flux de données codées, à partir d'au moins ladite une partie de l'image décodée et de ladite donnée de synthèse obtenue,
et dans lequel ladite donnée de synthèse correspond à au moins une partie d'une carte de profondeur.

Ce procédé peut comprendre au moins l'une des caractéristiques suivantes :
- le décodage à partir du flux de données codées d'au moins une donnée permettant de modifier la donnée de synthèse obtenue ou de contrôler l'obtention de la donnée de synthèse,
- la donnée de synthèse est obtenue à l'aide d'un réseau de neurones,
- la au moins une donnée décodée à partir du flux de données codées est une donnée de raffinement de ladite donnée de synthèse, et le procédé comprend en outre la modification de ladite donnée de synthèse à partir de ladite donnée de raffinement décodée,
- la donnée de synthèse est modifiée en ajoutant la donnée de raffinement à la donnée de synthèse,
- la au moins une donnée décodée à partir du flux de données codées est un paramètre de contrôle, le procédé comprenant en outre l'application dudit paramètre de contrôle lors de l'obtention de ladite donnée de synthèse
- l'obtention de la donnée de synthèse comprend :
   - l'extraction de ladite donnée de synthèse à partir d'au moins ladite une partie de l'image décodée,
   - la modification de ladite donnée de synthèse obtenue à l'aide d'un réseau de neurones
- le paramètre de contrôle décodé correspond à un paramètre de mise à jour dudit réseau de neurones utilisé pour modifier ladite donnée de synthèse.

D'autres modes de réalisation concernent un dispositif, un terminal, un programme d'ordinateur ou un support d'enregistrement lisible par ordinateur correspondants.

## Revendications

1. Procédé de décodage d'un flux (STR) de données codées représentatif d'une vidéo multi-vues, comprenant :
- le décodage, à partir du flux de données codées, d'au moins une image d'au moins une vue de la vidéo multi-vues,
- l'obtention d'au moins une donnée de synthèse optimisée, en fonction d'informations supplémentaires reçues, comprenant :
- si les informations supplémentaires reçues comprennent une donnée de raffinement codée :
- le décodage de ladite donnée de raffinement codée,
- l'obtention d'au moins une donnée de synthèse à partir d'au moins une partie de ladite image décodée,
- le raffinement de ladite donnée de synthèse obtenue par la donnée de raffinement décodée,
- si les informations supplémentaires reçues comprennent un paramètre de contrôle codé :
- le décodage dudit paramètre de contrôle codé,
- l'obtention de ladite au moins une donnée de synthèse optimisée à partir d'au moins une partie de ladite image décodée, contrôlée par l'application dudit paramètre de contrôle décodé,
ladite donnée de synthèse optimisée et ladite au moins une partie de l'image décodée étant destinées à être utilisées pour la synthèse d'au moins une image d'une vue intermédiaire de la vidéo multi-vues non codée dans ledit flux de données codées.

2. Procédé selon la revendication 1, dans lequel ladite donnée de synthèse correspond à au moins une partie d'une carte de profondeur.

3. Procédé selon la revendication 1, dans lequel les informations supplémentaires sont transmises dans le flux de données codées.

4. Procédé selon la revendication 1, dans lequel les informations supplémentaires sont transmises dans un flux distinct du flux de données codées.

5. Procédé selon la revendication 1, selon lequel le flux de données codées est décodé par un décodeur multi-vues.

6. Procédé selon la revendication 1, dans lequel la donnée de synthèse optimisée est obtenue à l'aide d'un réseau de neurones.

7. Dispositif de décodage d'un flux (STR) de données codées représentatif d'une vidéo multi-vues, comprenant un processeur (PROC0) et une mémoire (MEM0) configurés pour :
- décoder, à partir du flux de données codées, au moins une image d'au moins une vue de la vidéo multi-vues,
- obtenir au moins une donnée de synthèse optimisée, en fonction d'informations supplémentaires reçues, comprenant :
- si les informations supplémentaires reçues comprennent une donnée de raffinement codée :
- décoder ladite donnée de raffinement codée,
- obtenir au moins une donnée de synthèse à partir d'au moins une partie de ladite image décodée,
- raffiner ladite donnée de synthèse obtenue par la donnée de raffinement décodée,
- si les informations supplémentaires reçues comprennent un paramètre de contrôle codé :
- décoder ledit paramètre de contrôle codé,
- obtenir ladite au moins une donnée de synthèse optimisée à partir d'au moins une partie de ladite image décodée, contrôlée par l'application dudit paramètre de contrôle décodé,
ladite donnée de synthèse optimisée et ladite au moins une partie de l'image décodée étant destinées à être utilisées pour la synthèse d'au moins une image d'une vue intermédiaire de la vidéo multi-vues non codée dans ledit flux de données codées.

8. Terminal comprenant un dispositif de décodage selon la revendication 7 et un module de synthèse synthétisant au moins une image d'une vue intermédiaire de la vidéo multi-vues non codée dans ledit flux de données codées, à partir d'au moins ladite une partie de l'image décodée et de ladite donnée de synthèse optimisée.

9. Programme d'ordinateur comportant des instructions pour la mise en œuvre du procédé de traitement de données de vidéo multi-vues selon l'une quelconque des revendications 1 à 6, lorsque le programme est exécuté par un processeur.

10. Support d'enregistrement lisible par ordinateur, et comportant des instructions d'un programme d'ordinateur selon la revendication 9.
